# EUROPEAN PATENT APPLICATION

(11) **EP 1 484 147 A1**
(43) Date of publication of application: **08.12.2004**
(21) Application number: 03713070.5
(22) Date of filing: 07.03.2003
(51) Int. Cl.: B29B 17/00

(54) **INORGANIC WASTE-RECYCLING MACHINE AND METHOD FOR THE PRODUCTION OF A MOULDABLE PASTE HAVING VARIOUS USES**

(30) Priority: 08.03.2002 MX 0200008
(71) Applicant: Gonzales Salazar, José Luis, Guadalajara, Jalisco (MX); Gonzalez Preciado, Francisco Eduardo, Guadalajara, Jalisco (MX)
(72) Inventor: Gonzales Salazar, José Luis, Guadalajara, Jalisco (MX); Gonzalez Preciado, Francisco Eduardo, Guadalajara, Jalisco (MX)
(74) Representative: Carvajal y Urquijo, Isabel
(86) International application number: PCT/MX2003/000025
(87) International publication number: WO 2003/076154

(57) **Abstract**

This invention refers to a machine and a process for recycling inorganic trash and obtention of a molding paste for different usages, this machine is formed basically by; one hydraulic piston, a pushing plate, a receptor camera, one reactor, one pump and a heater equipment. Likewise, said machine is involved in a process, which stages are essential in order to obtain the hot molding paste with the adequate characteristics; that when cooling, is transformed into products substituting wood and materials for construction; such as bricks, vaults, floors, paving blocks, tiles, floor edges, etc. This products will not be corrupted by humidity or moth, do not become rotten and can be cut, machined, etc.

This machines does not require water in its industrial process, nor requires to wash the trash that is processed, does not pollute, has a low operation cost, since it is efficient and can be operated by just one person. This invention will benefit people and environment, since trash can be re-used and will avoid the use of and end with natural resources.

## Description

### TECHNICAL FIELD.

This invention refers to a machine and a process for recycling inorganic trash and transformation of it in a molding paste for different usages, such as wood substitutions and construction materials.

### BACKGROUND OF THE INVENTION

Currently, the conventional methods for the treatment of wastes generated in metropolitan areas, municipalities, towns and ranches, as well as tourist areas, naval, military, agricultural, commercial, roads, etc., are based mainly, in the separation of the same, according to its origin; in other words, all the foregoing wastes are transformed in *organic and inorganic trash,* the first one, is commonly reincorporated to the nature that gave its origin, by means of the natural biodegradation process. In regards to inorganic trash, it is generally divided in metallic or non metallic, plastics of all kind, forms and characteristics, glass, fibers and synthetic litters, rubber, etc; in commercial amounts, ecologically and economically significant, same that the recycling industry reincorporates, as raw materials for industrial processes in order to be processed again.

The great worldwide problem regarding the re-usage of inorganic wastes, can be considerably reduced by means of adequate machinery and processes, therefore, analyzing the foregoing problem, it was developed a machine, a process and a product, this last one as a result of processing trash and which is transformed in different useful items. This machine, is efficient and represents a safe of volume, space and energy, which is automated in all of its working stages, it can be operated by just one person, does not require water in its process, characteristic that conventional recycling machines lack, likewise, this machine does not need special or environmental hygiene conditions, this machine also reduces the size of its raw material (inorganic trash) up to 50 per cent or more and its technological characteristics allow it to become useful and long lasting products, for people, ecology, industry, commerce, etc., since it advantageously substitutes wood because it is not harmed by humidity or moth, do not get rotten; and can manufacture materials for construction such as bricks, vaults, floors, paving blocks; as well as columns, racks, staves, boards, planks, walls, beams, mudsills, divisions, parts for wood, automobile, craft and naval industry, as well as furniture, taps, sewers, frames, doors, windows, mallets, trash cans, flower stands, benches and vaults, among others.

These products when substituting natural resources, contribute to reduce their exploitation, improve the environment, avoid cutting of trees, less alteration of the environment, and therefore, require less trash deposits.

### DESCRIPTION

The characteristics of this new machine and its process are clearly shown in the following description and in the figure attached hereto. Each one of its parts has a reference number in order to be compared to the figure.

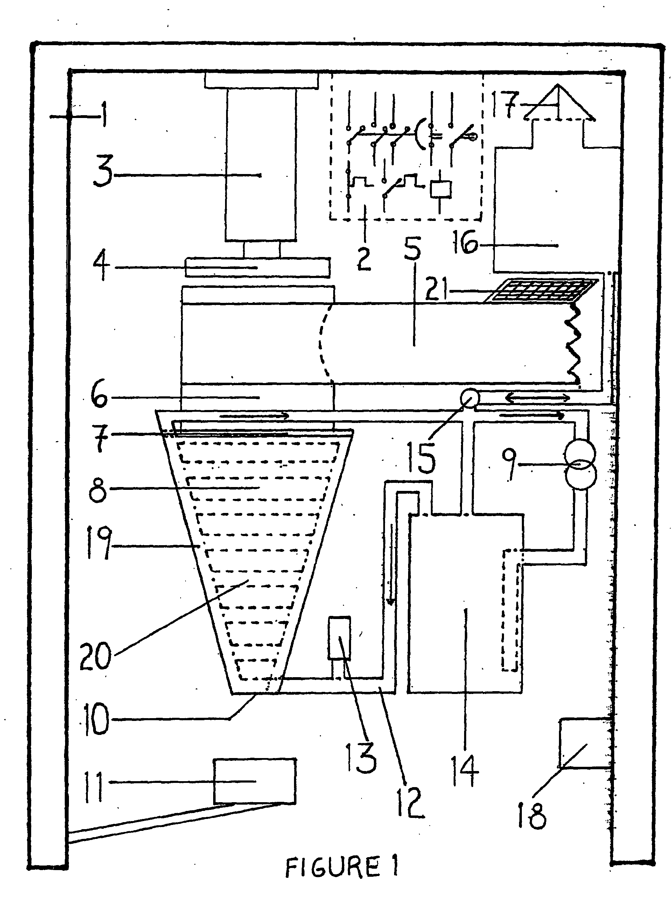

Figure 1. Is a general view of the machine, with each one of its parts. The machine for recycling inorganic trash is conformed by one metallic structure or chassis (1) that is used as general support for the equipment, including a control switchboard (2) where the electromechanical elements that govern the equipment are installed and as required, they accomplish their function automatically, semiautomatically or manually, depending on the stage of the process.

This switchboard (2) controls the filling of raw material, the ignition, the operation temperature and each one of the stages of the process; it controls the heat level for the ignition of the cool system in regular temperature, in this case the switchboard (2) is built with electromechanical devices in order to govern the operation of the machine and it can be governed by computer as well.

The machine has an hydraulic piston (3) which is the one that generates the force and the pressure; and for achieving it, the piston (3) in its movil part has a pushing plate (4) made up of steel, strong enough in order for the pressure of the piston (3) not to deform it, the piston (3) can be substituted by a force input, either mechanical, pneumatic, aeolian, hydraulic, transporter worm or spindle; the pushing plate (4) is a steel plate which shape will depend on the form of the receptor camera (6) of the raw material, in which case it is of circular form, it transmits the mechanical force that the piston applies (3), pressing and carrying the raw material towards the camera (6).

Raw material is deposited previously under the pushing plate (4) by a feeder worm (5); it is formed by a metallic tube; the worm (5) helps to introduce to the camera (6) the raw material that is processed; said worm (5) is connected in its other edge to a feeder system of raw material, this latter one is not part of the machine. The reception camera of the raw material (6) is a tube or a container in which the raw material is deposited to be processed and inside it, the piston delivers its force (3) in order to push with the pushing plate (4) the raw material that is being processed and introduces it into the reactor (8), likewise, the camera (6) has a flange (7) in its edge, which is a ring of steel, attached to the receptor camera (6) and helps to join the camera (6) with the reactor (8).

The reactor (8), is the newest and most important part of the machine, that consists in an equipment of cone shape, made up of steel, however, it can be made up of brass or aluminum, which *walls* (19) are hollow, in other words, it has double wall, through the interior wall some conducts are connected (20) that can be rounded, triangular, squared, in other words, they can be polygonal, in this case, the conducts (20) are triangular. Through this conducts (20) and the hollow walls (19) it is circulating, like connecting cells, the heating element, hot oil, pushed by a pump (9). The reactor (8) is the equipment within which it is carried out a transfer of heat within a range of 250 to 350 centigrade degree between the walls (20) and the conducts (19) and the raw material. It is not determined an exact level of temperature, since the raw material is of all kinds, forms and characteristics, the points of softening vary too much. The reactor (8), transforms the raw material by means of the heat, into a puddle mass, softening, agglutinating y homogenizing all of the materials, which once they have passed through the reactor, and still hot, are vacated through an exit overture (10) that is located in the farthest edge of the reactor (8). The hot and puddle mass, when exiting, falls and fills the molds (11) which will give strength and mechanical resistance to the mass, in order to convert it in the previously selected products. The molds (11) are of different forms according to the piece or product that is required to be manufactured; the molds are not part of the machine, but are a necessary part in order to explain the functioning of the machine. However, oil can be substituted, which is the heating element, by other components such as steam or hot air. The reactor (8), is of cone shape in order to allow the entrance of the raw material in its natural form, in other words, voluminous and with many hollows; however, the materials, when being softened and agglutinated because of the heat, will make the spaces disappear as raw material enters in it, in other words, it will be compacted; the cone shape is essential in order to form a molding paste, when compacted. In the reactor (8) it is achieved a uniform distribution of the heat, which transmits the heat to the raw material through all sides, however, such enters into the reactor (8) in a regular temperature, therefore, when being in contact with its corresponding conducts (20) and walls (19), where in its interior circulates the heating element, the raw material cools it; this is the reason why the pump (9) makes the heating element flow, forcing it to pass through the heater equipment (14), which increases again its temperature and such, once hot, continues its way, circulating, continuing its cycle in order to be introduced constantly through the walls (19) and conducts (20) of the reactor (8) the raw material circulates through them in a labyrinthine form, and hence it is able to soften and homogenize itself as well as to form a molding paste which exits through the overture (10) continuously. The pump (9) makes that the heating element circulates through the tubes (12), through the conducts (19) and walls (20), in other words, the tubes (12) are the means through which the heating means are circulating between the heater equipment (14) and the pump (9); in this form a sensor with thermometer (13) detects the temperature variations in the oil in order to maintain it at all times at the optimum operation temperature which is connected by tubes (12) with the heater equipment (14); the sensor (13) sends signals to the heater equipment (14) in order to maintain the temperature in the specific needs that are to be required. Since the heater equipment (14) is the one that heats and reheats the oil that is circulating, this equipment can also work with: gas, carbon, diesel, fuel oil or logs. The machine also has a Sensor or draining (15) that is connected by the tubes (12) to the rest of the machine, this sensor or draining (15) is an electro mechanic device which detects if the level of cool oil at a regular temperature is in an optimum condition, in order to turn on the machine, since if the oil is under its level, the machine will not turn on.

The machine has as well installed a compensation tank (16) which is connected to the rest of the equipment through the tubes (12); the function of the compensation_tank (16) is to absorb the enlargement carried out in the oil due to a natural reason when heating. Such shall has a volume of at least, two times the volume of operating cool oil, likewise, it is connected to a tube with a hole of vent with cap (17) in order to discharge into a container as a safety measure, if the enlargement of the oil is too high, disconnecting the system through this hole (17); the necessary air enters and exits in order to maintain the atmosphere's pressure to the heater element. The machine has also some sensors (18) that are two; the first one helps to detect the moment in which it is required to ignite or stop the feeder worm (5), when such is full or empty the receptor camera(6) as the case may be.

The second sensor (18), which is the sensor for ignition and turning off the stroke, controls the various positions of operation of the plate (4), in order to control the moment of re-initiation of the new operation cycle, and when a cycle is concluded, it sends a signal for initiation of the following cycle.

It is important to mention; that this machine is so versatile, that can function from an inclination angle between 30 and up to 90 degrees. Logically when being at 90 degrees it will be more efficient, since it will take advantage of the gravity. The essential components of the referred machine, are connected between them mechanically. The raw material, regardless of its characteristics, always process it with the same feasibility and efficiency and; its product always results with the same qualities. Dimensions of the machine: diametrically and longitudinally, will depend on the volume that is intended to be processed, for example, we have the following prototype; the dimensions of the model with a capacity for processing a volume of approximately 300 Kg. per hour are: ten tons in the piston (3); pushing plate (4) of 80 cm of diameter and 5 cm of thickness, receptor camera (6) of eighty centimeters of diameter by one meter of length; and the reactor (8) of cone shape, with entrance diameter of eighty cm. by eighty centimeters of length, with exit overture (10) of 15 cm. All of this components are made up of steel. However, scale models can be manufactured, with a capacity of 5 tons per hour. The structure or chassis (1) is designed in order to support all of the components and that such work vertically, likewise, the machine can be installed and operated, either in the same place where the trash is generated or in the same public or private trash dump, or even be portable. Other qualities are: that 90% of the components of the machine, does not require of machined, since they are of structural and roller kind. It does not have wear out parts and, therefore, the useful life of the machine will be longer. Its manufacture, maintenance and operation cost are much more economic than the conventional recycling equipments; and the raw material, is like flaws for other recycling equipments, in this machine, such is its raw material for its processes and afterwards it will be its product, since regardless of the kind of raw material introduced in the machine, it works with the same efficiency and the resulting product is obtained with the same qualities and properties.

The machine has been described up to this point, however, this invention refers also to a process, since such is involved to the functioning of the machine in order to obtain the molding paste, product of this invention, which has the following stages:

First stage, recollection of *inorganic* trash, which is the raw material to be processed, it does not require previous cleaning but has to be: plastics, regardless its type, form, size, color, use or quality, physical state, new, used for domestic purposes or industrial ones, in amounts no less than 80%, the other 20% is composed by other materials, such as rubber,_foam rubber, synthetic fabrics, burrs, glass, staples, paint, barren rocks, tags, glues or hasps. This mix of trash can contain up to 50% of dry ice in its different presentations.

The great amount of trash, can be polluted up to 10% with organic trash, which could be composed of paper, sawdust, tree leaves, grass, cotton in its different presentations, wood spalls, liquid residuals, food, earth, soot and dust. Due to the fact that the dimensions of the raw material to be processed are so different, for example: when transformed into disposable items, the chairs, tables or large carafe, pads or switchboards and auto parts, etc., when being voluminous, makes necessary, in order for the production to be efficient, to *fragment* all raw material and pass it through a screen (21).

The second stage is the introduction of the raw material once fragmented into the machine, through the feeder worm (5); the machine turns on through the control switchboard (2), it is verified by means of the sensor or draining (15), if the level of the heating element is in an optimum point for operation, and the pushing plate in the top (4), the machine turns on, heats the heating element by means of the heater equipment (14), makes it circulate by means of a pump (9) through the tubes (12) that connect such with the reactor (8). The feeder worm (5) takes the raw material and introduce it under the pushing plate (4). The pushing plate (4) transmits the mechanical force that is applied to the piston (3) pushing and carrying the raw material to the interior of the camera (6), once inside it, continues to be pushed and compressed by the pushing plate (4) until it begins to be introduced into the reactor (8). The reactor (8) has the function to transform the raw material by means of heat, in a puddle mass, agglutinating and homogenizing all of the materials, which once processed and still hot and in a form of paste, are vacated through the exit overture (10) located in the edge of the same.

Third stage: The puddle mass when exiting, fills the molds (11). The paste in the molds (11) remains in excess in the top, therefore, it is necessary to press it when it is still hot. When this part of the material is pressed, the remaining hollows if any, are filled and with such it can be obtained a better finishing and a higher mechanic resistance in the products. The cooling process of the products will depend on the size and thickness of the pieces. For example, a 2cm-thick piece by 10cm-width and one meter-long, will take approximately 10 minutes to cool. A sleeper will take 40 minutes to cool. The product, once cooled has a mechanic resistance towards compression that varies form 70 to 100 Kg/cm2. per square centimeter.

Among the new elements of this process are: that it does not require water in any of its stages, nor any other element but heat and strength, neither it requires that the raw material that is being processed has to be washed or cleaned, not even the place where the machine has to operate. It does not require special hygienic conditions. Likewise, it does not pollute the environment, since it does not produce residuals of any type or kind. The versatility of the raw material, the design, functioning, way of process, molding paste and the final products that can be manufactured by such, are the new element of this invention, since converts mixed and polluted trash, into new products, which can be commercialized.

This invention refers to a molding paste made up of 100% of inorganic material and to the products that can be made with it.

As described above, the machine and the process together converts the wastes into a hot molding paste, the paste is formed by: 80% plastics, 20% of other inorganic wastes, such as rubber, staples, etc.; and up to 10% can be organic trash which can contain the rest of the wastes, that when cooling, is transformed in wood substitutes and construction materials, for example: bricks, vaults, floors, paving blocks, tiles, floor edges, columns, racks, staves, ground-sills, boards, planks and walls, as well as beams, mudsills, divisions, parts for furniture and automobile industry, sewers, frames, doors, windows, mallets, cans,_benches, ornament items, etc.

All of these products generally will be formed by a single piece, however, if being doors or frames, they will be of two or more pieces, but most of the times, when exiting the molds, they will be ready to be assembled. Such will depend on the design and characteristics of the mold where the mass will be poured.

Likewise, the final products made up of this molding pastes based on inorganic waste, has the following qualities: are not rotten by humidity, moth, are not corrupted and can be cut, machined, shaped, brushed, filed, drilled, painted, sandpapered and polished; mended, assembled, screwed, glued, tapped and recycled.

On the other hand, this products can be painted, however the natural colors of these new products will have the predominant colors of the raw material. Another advantage of this products is that they do not need any other element, but heat and pressure, in order to be resistant and to have the desired form, it does not need time for forging, nor elements such as glues, solvents, substances or chemical products. It is so versatile that a lot of raw material which is introduced in order to be processed, will be ready to be used in one hour, therefore, it is quick, easy and economic.

Having described thoroughly my invention, I consider it is a novelty and therefore I claim of my exclusive property, the provisions set forth in the following clauses:

## Claims

1. A Machine for recycling inorganic trash and obtention of a molding paste for different uses, composed of; one structure or chassis, a control switchboard, one hydraulic piston, one pushing plate, a feeder worm, a receptor camera, one flange, one reactor, one pump, one overture, some tubes, one sensor with thermometer, one heater equipment, one draining sensor, one compensation tank, one overture for vent with cap and some sensors, **characterized by**; one structure or metallic chassis that helps to support all of the equipment and components, an automatic, semi-automatic or manual conventional switchboard, a receptor camera which is a tube where raw material is deposited, the hydraulic piston that generates force and is connected in its movil edge to a pushing plate, the pushing plate is connected to the camera where enters and exits the pushing plate, which transmits the force that the piston applies in order to carry the raw material to the camera. The tube of the receptor camera is directed to the pushing plate which is in the piston and the other edge is connected to the reactor. The receptor camera and the reactor are connected by a flange; one of the sides of the tubes of the receptor camera, is connected to the feeder worm. The reactor, which is an equipment of cone shape, that has in its interior some hollow walls, in other words, of double wall, are connected to some conducts in its interior; through the conducts circulates as communicating cells, the heating element pushed by the pump; the transfer of heat between the walls and conducts is carried out in the reactor; the reactor transforms the raw material by means of heat, into a puddle mass, softening, agglutinating and homogenizing all of the raw material, which once heated is vacated through the overture located in the edge of the reactor, in said reactor it is carried out a uniform distribution of heat and transfers it to the raw material, however such enters at a regular temperature and when being in contact with the conducts and walls, the raw material cools it, therefore the pomp compels the heating element to flue and makes it pass through the heater equipment. From the overture of the reactor it will be obtained the molding paste. The sensor with thermometer that detects the changes of temperature and sends signals to the heater equipment, is connected to the heater equipment. Likewise, a sensor or draining which is an electromechanical device connected to the tubes that detects the level of cool oil, through the same tubes is connected to a compensation tank that absorbs the enlargement of the oil for natural reason when heated; additionally, it is connected to a tube with a vent overture with cap, that disconnects the system if the enlargement of the oil is too high; some sensors, one is to detect the ignition of the feeder worm or when it has to stop when the receptor camera is full or empty; another sensor that controls the different positions of operation of the plate, in order to control the moment to re-ignite the new operation cycle, and when such ends, it sends a signal in order to initiate the new cycle.

2. A process for recycling inorganic trash and obtention of a molding paste with the machine according to reivindication 1, **characterized by**; the following stages: The first one, recollection of raw material, inorganic trash, completely mixed that contains a minimum of 80% of plastic, regardless typesofshapes and sizes or qualities, the other 20% may contain rubber, foam rubber, synthetic fabrics, burrs, glass, staples or any other material except plastic, this mix of trash can contain up to 50% of dry ice in its different presentations, the other 10% can be polluted material, in other words, organic trash such as paper or sawdust, it is necessary to fragment all material and pass it through a screen. The second stage; which consists in introducing the raw material into the machine through the feeder worm, and the machine turns on by means of the control switchboard, is reviewed by means of the sensor or draining if the heating element level is in the optimum point of operation, when the level of heat is in the optimum point, and the pushing plate in the top, the machine turns on, heats the heating element by means of the heater equipment, makes it circulate through the pump by means of the tubes that connect such with the reactor. The feeder worm takes the raw material and introduce it under the pushing plate. The pushing plate transfers the mechanic force that applies the piston pushing and carrying the raw material to the interior of the camera, once inside it, continues pushing and compressing by the pushing plate until being introduced into the reactor. The reactor has the function of transforming the raw material by means of heat, into a puddle mass, agglutinating and homogenizing all of the materials, which once processed and still hot and in a paste form, is vacated through and exit overture located in the farthest edge of the same. The third stage; The puddle mass when exiting, fills the molds, leaving an excess in the top part, therefore, it is necessary to press it when it is still hot. When this part of the material is being pressed, the remaining hollows if any, are filled and, therefore it is obtained a better finished and a higher mechanic resistance in products. The cooling process of the products, will depend on the size and thickness of the pieces.

3. A molding paste for different usages obtained according to the process of reivindication 2, characterized because it is formed by inorganic trash completely mixed, which contains a minimum of 80% of plastics of any kind, 20% of rubber, synthetic materials, burrs, glass, staples, etc.; and the rest can be 10% of organic trash, which can be formed in general by paper, sawdust, food and wastes of such kind.

4. The products obtained from the molding paste for different usages according to reivindication 3.
